# EUROPEAN PATENT APPLICATION

(11) **EP 3 258 524 A1**
(43) Date of publication of application: **20.12.2017**
(21) Application number: 17171715.0
(22) Date of filing: 18.05.2017
(51) Int. Cl.: H01M 8/0258, H01M 8/0256, C25B 11/03, B01D 53/32, H01M 8/0656

(54) **GAS DIFFUSION LAYER AND ELECTROCHEMICAL HYDROGEN PUMP**

(30) Priority: 16.06.2016 JP 2016119602
(71) Applicant: Panasonic Intellectual Property Management Co., Ltd., Osaka-shi, Osaka 540-6207 (JP)
(72) Inventor: YAKUMARU, Yuuichi, Osaka-shi, Osaka 540-6207 (JP); OKAICHI, Atsuo, Osaka-shi, Osaka 540-6207 (JP)
(74) Representative: Grünecker Patent- und Rechtsanwälte PartG mbB

(57) **Abstract**

A gas diffusion layer (100) includes a laminate (20) made up of sheets (22) each having a plurality of through-holes (21) through which gas passes. One or a plurality of the sheets (22) in the laminate (20) includes communication paths (23) to communicate the through-holes (21) in another sheet (22) adjacent to the one sheet or one of the plurality of sheets (22) with each other or to communicate the through-holes (21) in another sheet (22) adjacent to the one sheet or one of the plurality of sheets (22) with the through-holes in the other adjacent sheet (22), the through-holes (21) being separated from and being not communicated with the other through-holes (21) in the same sheet (22).

## Description

### BACKGROUND

### 1. Technical Field

The present disclosure relates to a gas diffusion layer and an electrochemical hydrogen pump.

### 2. Description of the Related Art

Due to environmental problems such as global warming and energy problems such as depletion of oil resources, attention has recently been focused on hydrogen gas as a clean alternate energy source that is to be substituted for fossil fuel. Hydrogen gas is expected as clean energy for the reason that, when the hydrogen gas is burnt, only water is released while carbon dioxide, nitrogen oxides, etc., which may cause global warming, are not discharged. Devices utilizing hydrogen gas as fuel are fuel cells, for example. The fuel cells have been developed and have become popular for use in automotive power supplies and private power generation in homes. In future hydrogen society, it is to be demanded not only to produce hydrogen gas, but also to develop techniques with which the hydrogen gas can be stored at high density and transported or utilized in a small capacity and at a low cost. Moreover, promotion of the infrastructure for fuel supply is necessary to realize further widespread use of the fuel cells. In view of such situations, various proposals have been made to refine and pressurize high-purity hydrogen gas.

As illustrated in Fig. 9, in Japanese Patent No. 4733380, for example, a support member 30 for an electrolyte membrane of a high differential-pressure electrochemical cell is used as a gas diffusion layer that is held in contact with the electrolyte membrane. More specifically, a plurality of rectangular recesses is formed in one surface of the support member 30, and a plurality of rhombic recesses is formed in the other surface. Overlapped portions of both the recesses constitute triangular through-holes 31 through which a fluid passes. The above structure makes it possible to suppress clogging of fluid flow channels, which may be caused in a prior-art gas diffusion layer of mesh type, and to ensure rigidity endurable against a differential pressure between the high pressure side and the lower pressure side of the electrochemical cell. Accordingly, such a deformation as giving rise to a breaking point in the electrolyte membrane is suppressed with the support member 30 supporting the electrolyte membrane.

### SUMMARY

However, diffusivity of gas flowing in the gas diffusion layer is not sufficiently taken into consideration in the related art.

One non-limiting and exemplary embodiment provides a gas diffusion layer in which more consideration is paid to diffusivity of gas than in the related art. Another non-limiting and exemplary embodiment provides an electrochemical hydrogen pump including the gas diffusion layer.

In one general aspect, the techniques disclosed here feature a gas diffusion layer including a laminate made up of sheets each having a plurality of through-holes through which gas passes, wherein one or a plurality of the sheets in the laminate includes communication paths to communicate the through-holes in another sheet adjacent to the one sheet or one of the plurality of sheets with each other or to communicate the through-holes in another sheet adjacent to the one sheet or one of the plurality of sheets with the through-holes in the other adjacent sheet, the through-holes being separated from and being not communicated with the other through-holes in the same sheet.

According to the one general aspect, the gas diffusion layer is obtained in which more consideration is paid to diffusivity of gas than in the related art.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1A illustrates an example of a gas diffusion layer according to a first embodiment;
Fig. 1 B illustrates an example of a gas diffusion layer according to a modification of the first embodiment;
Fig. 2A illustrates an example of a sheet in a laminate of the gas diffusion layer according to the first embodiment;
Fig. 2B illustrates an example of a sheet in the laminate of the gas diffusion layer according to the first embodiment;
Fig. 2C illustrates an example of a sheet in the laminate of the gas diffusion layer according to the first embodiment;
Fig. 3 illustrates an example of a gas diffusion layer according to First Example of the first embodiment;
Fig. 4 illustrates an example of a gas diffusion layer according to Third Example of the first embodiment;
Fig. 5 illustrates an example of a gas diffusion layer according to Fourth Example of the first embodiment;
Fig. 6 illustrates an example of an electrochemical hydrogen pump according to a second embodiment;
Fig. 7 illustrates an example of the electrochemical hydrogen pump according to the second embodiment;
Fig. 8 illustrates an example of a gas diffusion layer in an electrochemical hydrogen pump according to Example of the second embodiment; and
Fig. 9 illustrates an example of a prior-art gas diffusion layer.

### DETAILED DESCRIPTION

### First Embodiment

The following points have been found as a result of intensive studies on diffusivity of gas flowing in a gas diffusion layer.

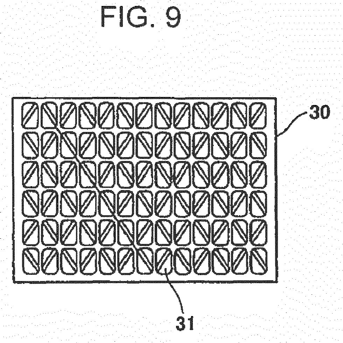

Fig. 9 representing the related art illustrates that, on the front (one) side of the support member 30, the adjacent triangular through-holes 31 are communicated with each other in a lattice pattern forming the rhombic recesses. It is also illustrated that, on the rear (other) side of the support member 30, the adjacent triangular through-holes 31 are communicated with each other in a lattice pattern forming the rectangular recesses. Stated in another way, the through-holes 31 formed in the same single sheet of the support member 30 are not separated, but are communicated with each other. When the through-holes 31 are communicated with each other in the same single sheet as described above, biasing of gas diffusion is reduced and uniformity of the gas diffusion is improved.

When the support member 30 in Japanese Patent No. 4733380 is constituted, for example, such that gas is supplied to flow into the through-holes 31 of the support member 30 from a gas flow channel of an appropriate flow channel member, the gas is not directly supplied, from the gas flow channel, to those through-holes 31 that are each positioned on a line perpendicularly extending from a portion of the support member 30 where the gas flow channel of the flow channel member is not provided. In the support member 30, however, because the through-holes 31 are communicated with each other in the same single sheet as described above, the through-holes 31 to which the gas is not directly supplied from the gas flow channel are also indirectly supplied with the gas via those through-holes 31 which are each positioned on a line perpendicularly extending from a portion of the support member 30 where the gas flow channel of the flow channel member is provided, and to which the gas is directly supplied from the gas flow channel.

On the other hand, when the through-holes are not communicated with each other in the same single sheet unlike the support member 30, the through-holes that are each not positioned on the line perpendicularly extending from the gas flow channel are even indirectly not supplied with the gas via the other through-holes. Hence gas diffusion becomes not uniform in the gas diffusion layer. Non-uniformity of the gas diffusion may lead to such a possibility in an electrochemical cell, for example, that the reaction overpotential increases, namely that the power consumption increases.

Taking the above point into account, the inventors have attained an idea of, in a laminate of sheets each having a plurality of through-holes, forming communication paths to communicate through-holes with each other, which are separated from and are not communicated with the other through-holes in the same single sheet, in a sheet adjacent to the former sheet.

In more detail, a gas diffusion layer according to a first aspect of the present disclosure includes a laminate made up of sheets each having a plurality of through-holes through which gas passes, wherein one or a plurality of the sheets in the laminate includes communication paths to communicate the through-holes in another sheet adjacent to the one sheet or one of the plurality of sheets with each other or to communicate the through-holes in another sheet adjacent to the one sheet or one of the plurality of sheets with the through-holes in the other adjacent sheet, the through-holes being separated from and being not communicated with the other through-holes in the same sheet.

With the features described above, the gas diffusion layer according to the first aspect can make gas diffused more uniformly than in the case of not forming the communication paths in the adjacent sheet. More specifically, since the adjacent sheet includes the communication paths, the gas passing through the laminate from an appropriate flow channel member can be delivered not only in a sheet stacking direction, but also in any desired direction. Thus, by stacking, as the laminate, the sheets including the communication paths in different layout patterns, a flow direction of the gas in the laminate can be set optionally. As a result, diffusivity of the gas in the gas diffusion layer is improved.

Assuming, for example, the case of supplying gas to flow into the through-holes in the laminate via a gas flow channel of a flow channel member, if the laminate does not include the above-described communication paths, the gas does not flow into those ones of the through-holes in the laminate, those through-holes being each positioned on a line perpendicularly extending from a portion of the flow channel member where the gas flow channel of the flow channel member is not provided. This leads to a possibility that diffusion of the gas in the gas diffusion layer becomes not uniform. In the gas diffusion layer according to the first aspect, however, since the gas can be caused to flow into those through-holes in the laminate as well via the communication paths, non-uniformity of the gas diffusion can be suppressed.

According to a second aspect of the present disclosure, in the gas diffusion layer according to the first aspect, the number of the communication paths in one of the plurality of sheets in the laminate, the one sheet being in contact with a catalyst layer, may be smaller than the number of the communication paths in another sheet of the plurality of sheets.

With the feature described above, uniformity of the gas diffusion is improved. Usually, the through-holes and the communication paths have different shapes and hence have different opening areas. The different opening areas generate different fluid resistances and cause different levels of gas fluidity between the through-holes and the communication paths, thus causing non-uniformity of the gas diffusion. By reducing the number of the communication paths, the gas can be supplied more uniformly over the entirety of the catalyst layer.

According to a third aspect of the present disclosure, in the gas diffusion layer according to the first aspect or the second aspect, adjacent two of the sheets in the laminate may be bonded to each other.

With the feature described above, a relative displacement between the sheets in the laminate is reduced even under conditions where high pressure is applied to the gas diffusion layer. This reduces a possibility that diffusivity of the gas lowers due to the relative displacement between the through-holes in the adjacent sheets.

According to a forth aspect of the present disclosure, in the gas diffusion layer according to any one of the first to third aspects, the through-holes and the communication paths may be formed in the same one principal surface of the one sheet or each of the plurality of sheets.

With the feature described above, the gas can be diffused more uniformly than in the case of forming only the through-holes in the sheet. Furthermore, an amount of the gas diffusing in a surface direction of the sheet is reduced and an amount of the gas leaking in the surface direction of the sheet through a gap between the sheets is also reduced in comparison with the case of forming only the communication paths in the sheet.

According to a fifth aspect of the present disclosure, in the gas diffusion layer according to any one of the first to the forth aspects, respective opening areas of the ttrrough-holes and the communication paths in the same one principal surface of the one sheet or each of the plurality of sheets may be different from each other.

According to an sixth aspect of the present disclosure, in the gas diffusion layer according to the first to the fifth aspects, the opening area of the communication paths may be larger than the opening area of the through-holes in the same one principal surface of the one sheet or each of the plurality of sheets.

With the features described above, diffusion resistance of the gas is reduced in comparison with the case of setting the opening area of the communication paths to be smaller than the opening area of the through-holes.

According to a seventh aspect of the present disclosure, in the gas diffusion layer according to the first to the sixth aspects, the respective numbers of the through-holes and the communication paths in the same one principal surface of the one sheet or each of the plurality of sheets may be different from each other.

According to a eighth aspect of the present disclosure, in the gas diffusion layer according to the seventh aspect, the number of the through-holes may be larger than the number of the communication paths in the same one principal surface of the one sheet or each of the plurality of sheets.

With the features described above, the amount of the gas diffusing in the surface direction of the sheet is reduced and the amount of the gas leaking in the surface direction of the sheet through the gap between the sheets is also reduced in comparison with the case of setting the number of the through-holes to be smaller than the number of the communication paths.

According to an ninth aspect of the present disclosure, in the gas diffusion layer according to the first to the eighth aspects, an area of a region of the sheet where the through-holes are not opened may be larger than an opening area of the through-holes in a zone of the same one principal surface of the sheet, the zone being positioned in an overlapped relation to a catalyst layer to which the gas diffusion layer is adjacent.

With the feature described above, the provision of the communication paths contributes to improving the gas diffusivity to a larger extent than in the case of setting, as in the related art, the opening area of the through-holes to be larger than the area of the region of the sheet where the through-holes are not opened. The reason is as follows. If the sheet is displaced in the surface direction, an overlapped area between the through-holes in the adjacent sheets is reduced and the gas diffusivity is reduced. On that occasion, when a total opening area of the plurality of through-holes formed in the sheet is relatively small, the overlapped area between the through-holes in the adjacent sheets is reduced, thus causing a larger reduction in the gas diffusivity than in the case where the total opening area of the through-holes is relatively large. This is because, for example, when the opening area of the through-holes is relatively large, a reduction rate of the opening area is relatively small even with the displacement of the sheet in the surface direction causing a reduction of the overlapped area between the through-holes in the adjacent sheets, but when the opening area of the through-holes is relatively small, the reduction rate is increased even at the same amount of reduction in the opening area of the through-holes. Thus, the reduction in the gas diffusivity is suppressed with the provision of the communication paths.

An electrochemical hydrogen pump according to a tenth aspect of the present disclosure includes an electrolyte membrane having a pair of principal surfaces, a cathode catalyst layer disposed on one of the principal surfaces of the electrolyte membrane, an anode catalyst layer disposed on the other principal surface of the electrolyte membrane, a cathode gas diffusion layer disposed in contact with the cathode catalyst layer, an anode gas diffusion layer disposed in contact with the anode catalyst layer, a first plate including a gas flow channel through which anode gas flows, a second plate including a gas flow channel through which cathode gas flows, and a voltage applying unit that applies a voltage between the cathode catalyst layer and the anode catalyst layer, wherein the anode gas diffusion layer includes the gas diffusion layer according to any one of the first to the ninth aspects.

With the features described above, the gas diffusion layer used in the electrochemical hydrogen pump according to the twelfth aspect can made the gas diffused more uniformly than in the case of not forming the through-holes in the adjacent sheet.

According to a eleventh aspect of the present disclosure, in the gas diffusion layer used in the electrochemical hydrogen pump according to the tenth aspect, the communication path may communicate one of the through-holes in the sheet, the one through-hole being positioned on a line perpendicularly extending from the gas flow channel in the first plate, with another one of the through-holes in the sheet, the other through-hole being positioned on a line perpendicularly extending from a portion of the first plate where the gas flow channel is not provided.

With the feature described above, the gas flowing through one of the through-holes in the sheet, the one through-hole being positioned on the line perpendicularly extending from the gas flow channel in the first plate, flows into another one of the through-holes in the sheet, the other through-hole being positioned on the line perpendicularly extending from the portion of the first plate where the gas flow channel is not provided, via the communication path. Therefore, uniformity of the gas diffusivity is improved.

According to a twelfth aspect of the present disclosure, in the gas diffusion layer used in the electrochemical hydrogen pump according to the tenth aspect, the cathode gas diffusion layer may include a single sheet including a plurality of ventilation holes.

Here, the above-mentioned single sheet is not such a laminate made up of a plurality of sheets as constituting the anode gas diffusion layer. The above-mentioned single sheet may be, for example, a metal steel plate including a plurality of through-holes formed therein, or may be a sintered body of metal powder or a sintered body of metal fibers, the sintered body including a plurality of ventilation formed therein.

Embodiments of the present disclosure will be described in detail with reference to the drawings. It is to be noted that the embodiments described below represent non-exclusive or specific examples. Numerical values, shapes, materials, components, and layout positions and connection forms of the components, which are described in the following embodiments, are merely illustrative, and they are not purported to limit the present disclosure. Among the components in the following embodiments, those ones not stated in independent claims, which define the most significant concepts, are described as optional components.

### Device Configuration (Layer Structure)

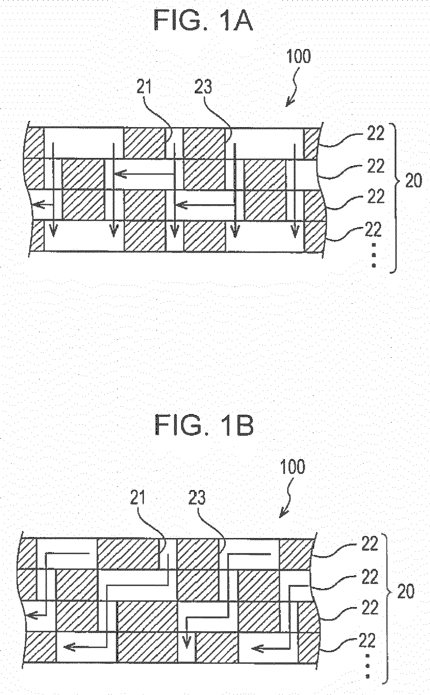

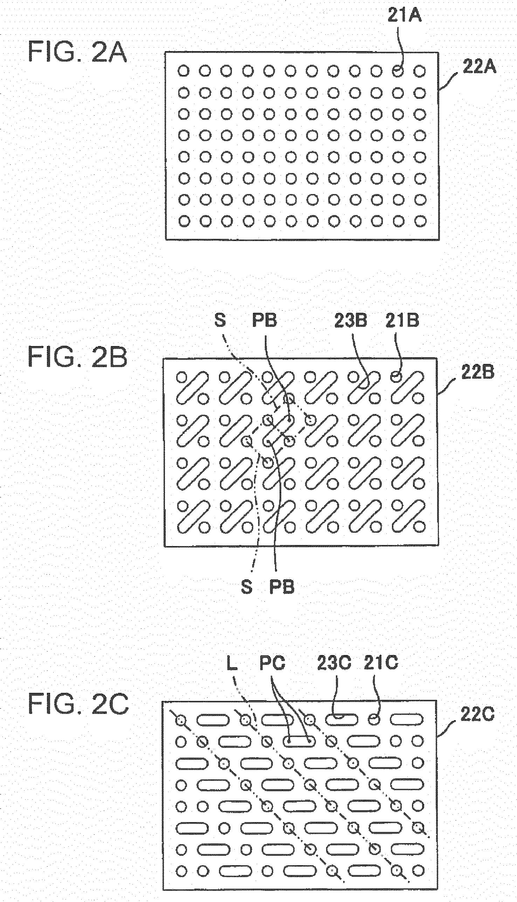

Fig. 1A illustrates an example of a section of a gas diffusion layer according to a first embodiment. Figs. 2A, 2B and 2C each illustrate, as a plan view, an example of a sheet in a laminate of the gas diffusion layer according to the first embodiment.

As illustrated in Fig. 1A, a gas diffusion layer 100 includes a laminate 20. The laminate 20 includes sheets 22 each having a plurality of through-holes 21 through which gas passes. Each of the through-holes 21 is separated from and is not communicated with the other through-holes 21 in the same single sheet 22. In addition, at least one of the sheets 22 in the laminate 20 includes communication paths 23 to communicate the through-holes 21 in another sheet 22 adjacent to the at least one sheet with each other, those through-holes being separated from and being not communicated with the other through-holes 21 in the adjacent same one sheet 22. The structure of the laminate 20 may be optionally selected insofar as the laminate 20 includes the sheets 22 each having the plurality of through-holes 21 and at least one of the sheets 22 in the laminate 20 includes the communication paths 23 to communicate the through-holes 21 with each other.

In the example illustrated in Fig. 1A, the laminate 20 includes gas flow channels (hereinafter referred to as "reference gas flow channels") that extend in a direction penetrating the laminate 20, and that are constituted by the through-holes 21 and respective opposite end portions of the communication paths 23, and gas flow channels that are each branched from one of the reference gas flow channels so as to extend in a direction parallel to a principal surface of the laminate 20 up to the adjacent reference gas flow channel, and that are constituted by the communication paths 23. With such a structure, the communication paths 23 communicate the through-holes 21 in another sheet 22 adjacent to the sheet 22 in which the communication paths 23 are formed, those through-holes being separated from and being not communicated with the other through-holes 21 in the other adjacent sheet 22. An alternate example of the gas diffusion layer 100 (specifically, the laminate 20) will be described later as a modification.

As illustrated in Fig. 2A, for example, when looking at the laminate 20 in a plan view, a plurality of through-holes 21A may be formed in a rectangular metal sheet 22A, which constitutes the sheet 22 in the laminate 20, in a matrix (lattice) pattern with equal pitches in the vertical and horizontal directions. The through-holes 21A may have any suitable shape. The through-holes 21A may be each, for example, a circular hole with a diameter of about several ten microns (e.g., about 50 µm). The metal sheet 22A can be made of, e.g., stainless steel or titanium, but materials of the metal sheet 22A are not limited to those examples. It is to be noted that the metal sheet 22A illustrated in Fig. 2A does not include the above-mentioned communication paths. Fig. 2A is a plan view when looking at the metal sheet 22A with one principal surface positioned on the upper side.

As illustrated in Fig. 2B, for example, a plurality of through-holes 21 B may be formed in a rectangular metal sheet 22B, which constitutes the sheet 22 in the laminate 20, at equal pitches in the vertical and horizontal directions. The through-holes 21 B may have any suitable shape. The through-holes 21 B may be each, for example, a circular hole with a diameter of about several ten microns (e.g., about 50 µm). The metal sheet 22B can be made of, e.g., stainless steel or titanium, but materials of the metal sheet 22B are not limited to those examples. Fig. 2B is a plan view when looking at the metal sheet 22B with one principal surface positioned on the upper side.

In the example illustrated in Fig. 2B, the through-holes 21 B are arrayed in the vertical and horizontal directions in such a pattern that a rhombic shape S denoted by two-dot-chain lines is defined when respective centers of the adjacent through-holes 21B are interconnected. In the illustrated example, communication paths 23B are each formed so as to define an opening that obliquely interconnects respective centers PB of the adjacent rhombic shapes S. It can be said that each of the communication paths 23B extends in a direction parallel to a first direction in which the through-holes 21 B are communicated with each other without intersecting the communication path 23B. It can also be said that the communication paths 23B are each formed so as to define an opening which interconnects respective midpoints (PB) of linear lines interconnecting those ones of the adjacent through-holes 21 B (namely, of the through-holes 21 B adjacent to each other in the vertical and horizontal directions), those ones being adjacent to each other in a direction different from the first direction and having a longer spacing distance. Furthermore, the through-holes 21 B and the communication paths 23B are arrayed, for example, such that when the metal sheet 22B and the metal sheet 22A are stacked, some of the through-holes 21A are overlapped with the through-holes 21 B and the other through-holes 21A are overlapped with opposite end portions of the communication paths 23B. In this case, therefore, the communication paths 23B can communicate the through-holes 21A with each other.

The communication paths 23B may have any suitable shape. For example, when the through-holes 21 B are each a circular hole with a diameter of about several ten microns (e.g., about 50 µm), the communication paths 23B may be each a slit with a width of about several ten microns (e.g., about 50 µm).

Alternatively, as illustrated in Fig. 2C, a plurality of through-holes 21C may be formed in a rectangular metal sheet 22C that constitutes the sheet 22 in the laminate 20. The through-holes 21C may have any suitable shape. The through-holes 21C may be each, for example, a circular hole with a diameter of about several ten microns (e.g., about 50 µm). The metal sheet 22C can be made of, e.g., stainless steel or titanium, but materials of the metal sheet 22C are not limited to those examples. Fig. 2C is a plan view when looking at the metal sheet 22C with one principal surface positioned on the upper side.

In the example illustrated in Fig. 2C, the through-holes 21C are arrayed in the vertical and horizontal directions in such a pattern that an oblique linear line L denoted by a two-dot-chain line is defined when respective centers of the adjacent through-holes 21C are interconnected without intersecting the communication path 23C. In this example, the communication paths 23C are each formed so as to define an opening that horizontally interconnects two intermediate points PC resulting from dividing a linear line, which interconnects the through-holes 21C adjacent to each other in the horizontal direction, into equal three parts. Furthermore, the through-holes 21C and the communication paths 23C are arrayed, for example, such that when the metal sheet 22A and the metal sheet 22C are stacked, some of the through-holes 21A are overlapped with the through-holes 21C and the other through-holes 21A are overlapped with opposite end portions of the communication paths 23C. In this case, therefore, the communication paths 23C can communicate the through-holes 21A with each other.

The communication paths 23C may have any suitable shape. For example, when the through-holes 21C are each a circular hole with a diameter of about several ten microns m (e.g., about 50 µm), the communication paths 23C may be each a slit with a width of about several ten microns (e.g., about 50 µm).

With the features described above, the gas diffusion layer 100 according to this embodiment can make gas diffused more uniformly than in the prior art. More specifically, since the laminate 20 of the gas diffusion layer 100 includes the communication paths 23, the gas passing through the laminate 20 can be delivered not only in one direction, but also in any desired direction. Thus, by stacking, as the laminate 20, the sheets 22 including the communication paths 23 in different layout patterns, a flow direction of the gas in the laminate 20 can be set optionally. As a result, diffusivity of the gas in the gas diffusion layer 100 is improved.

The sheets 22 including the communication paths 23 in different layout patterns can be combined with each other in any suitable way. For example, a metal sheet having a different layout pattern from the metal sheet 22C may be a metal sheet including the communication paths 23C at positions horizontally deviated from those in the metal sheet 22C, or may be the metal sheet 22B.

In the case of, for example, supplying gas to flow into the through-holes 21 of the laminate 20 from a gas flow channel of an appropriate flow channel member not illustrated, there is a possibility that, if the laminate 20 does not include the above-described communication paths, the gas does not flow into those through-holes 21, which are each positioned on a line perpendicularly extending from a portion of the flow channel member where the gas flow channel of the flow channel member is not provided, and that diffusion of the gas in the laminate 20 becomes not uniform. In the gas diffusion layer 100 according to this embodiment, however, the gas can be supplied to flow into the above-mentioned through-holes 21 in the laminate 20 via the communication paths 23, and hence non-uniformity of the gas diffusion can be suppressed.

Additionally, the following points are understood from the metal sheet 22B and the metal sheet 22C illustrated respectively in Figs. 2B and 2C. First, the through-holes and the communication paths are formed in the same one principal surface of the sheet. Furthermore, respective opening areas of the through-holes and the communication paths in the same one principal surface of the sheet are different from each other. In particular, the opening area of the communication paths is larger than that of the through-holes in the same one principal surface of the sheet. Moreover, the respective numbers of the through-holes and the communication paths in the same one principal surface of the sheet are different from each other. In particular, the number of the through-holes is larger than that of the communication paths in the same one principal surface of the sheet.

It is to be noted that the above-mentioned shapes and sizes of the through-holes 21 and the communication paths 23 are to be taken as illustrative only, and not limiting the present disclosure.

### Modification

Fig. 1B illustrates an example of a gas diffusion layer according to a modification of the first embodiment.

As illustrated in Fig. 1B, a gas diffusion layer 100 includes a laminate 20. The laminate 20 includes sheets 22 each having a plurality of through-holes 21 through which gas passes. In addition, at least one of the sheets 22 in the laminate 20 includes communication paths 23 to communicate the through-holes 21 with each other.

In the example illustrated in Fig. 1B, the laminate 20 includes the through-holes 21 that constitute penetration paths of gas flow channels (hereinafter referred to as "stepwise gas flow channels") each extending in a step-like shape, the penetration paths extending in a direction penetrating the laminate 20, and the communication paths 23 each of which communicates the penetration paths of the stepwise gas flow channels with each other. With such a structure, the communication paths 23 communicate the through-holes 21 in other sheets 22 adjacent to the sheet 22 in which the communication paths 23 are formed.

Practical exemplary configurations of the metal sheet constituting the sheet 22 in the laminate 20 when looking at the laminate 20 in a plan view are the same as those described in the above first embodiment, and hence are not described here.

With the features described above, the gas diffusion layer 100 according to this modification can make gas diffused more uniformly than in the prior art. Details of the operation and the advantageous effects of the gas diffusion layer 100 according to this modification are similar to those of the gas diffusion layer 100 according to the first embodiment, and hence are not described here.

The gas diffusion layer 100 according to this modification may be constituted in a similar structure to that of the gas diffusion layer 100 according to the first embodiment except for the above-described features.

### First Example

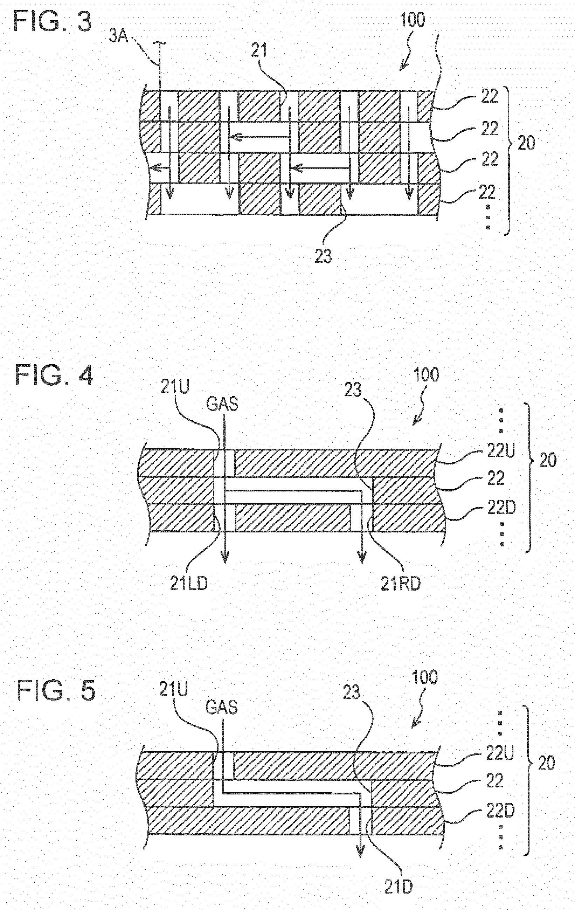

Fig. 3 illustrates an example of a gas diffusion layer according to First Example of the first embodiment.

A gas diffusion layer 100 according to First Example is featured in that, in the gas diffusion layer 100 according to the first embodiment or the modification of the first embodiment, the number of communication paths 23 in a sheet 22 (hereinafter referred to as a "contact layer 22" in some cases), which is in contact with an anode catalyst layer 3A of the laminate 20, is smaller than that in other sheets. While Fig. 3 illustrates an example in which the contact layer 22 is disposed in the laminate 20 illustrated in Fig. 1A, the contact layer 22 may be disposed in the laminate 20 illustrated in Fig. 1B.

While the metal sheet constituting the contact layer 22 may be the metal sheet 22A, illustrated in Fig. 2A, not including the communication paths, the present disclosure is not limited to such a case. Furthermore, while a metal sheet different from the contact layer 22 may be at least one of the metal sheet 22B illustrated in Fig. 2B and the metal sheet 22C illustrated in Fig. 2C, the present disclosure is not limited to such a case. In addition, as illustrated in Figs. 2A to 2C, an area of a region of the metal sheet where the through-holes are not opened is larger than an opening area of the through-holes in the metal sheet. Accordingly, the area of the region of the metal sheet where the through-holes are not opened is larger than the opening area of the through-holes in a zone of the same one principal surface of the sheet, the zone being positioned in an overlapped relation to the catalyst layer to which the gas diffusion layer is adjacent.

The sheet 22 in the laminate 20 has a larger contact area between the anode catalyst layer 3A and the sheet 22 as the number of the communication paths 23 reduces. Thus, since a contact area between the contact layer 22 and the anode catalyst layer 3A is larger than that in the case where the anode catalyst layer 3A is held in contact with a different sheet, contact resistance between the contact layer 22 and the anode catalyst layer 3A can be reduced.

When the number of the communication paths 23 in the sheet 22 of the laminate 20 increases, a variation of fluid resistance in a plane of the sheet 22 tends to increase. For example, when a region including a larger number of the communication paths and a region including a smaller number of the communication paths are both present in the plane of the sheet 22, the fluid resistance in the former region is lower than that in the latter region because the communication path 23 has a larger opening area than the through-hole 21. Thus, gas is more apt to flow through the former region than through the latter region. Therefore, if the sheet 22 including the communication paths 23 in a larger number is held in contact with the anode catalyst layer 3A, there is a possibility of impeding even supply of the gas to the entirety of the anode catalyst layer 3A from the laminate 20. In the gas diffusion layer 100 according to First Example, however, such a possibility is reduced because the contact layer 22 including the communication paths 23 in a smaller number is held in contact with the anode catalyst layer 3A.

The gas diffusion layer 100 according to First Example may be constituted in a similar structure to that of the gas diffusion layer 100 according to the first embodiment or the modification of the first embodiment except for the above-described features.

### Second Example

A gas diffusion layer 100 according to Second Example is featured in that, in the gas diffusion layer 100 according to any one of the first embodiment, the modification of the first embodiment, and First Example of the first embodiment, adjacent two of the sheets 22 in the laminate 20 are bonded to each other. For example, metal sheets constituting the adjacent sheets 22 are welded through sintering, whereby the adjacent sheets 22 are properly bonded to each other.

The gas diffusion layer 100 according to Second Example may be constituted in a similar structure to that of the gas diffusion layer 100 according to any one of the first embodiment, the modification of the first embodiment, and First Example of the first embodiment except for the above-described features.

### Third Example

Fig. 4 illustrates an example of a gas diffusion layer according to Third Example of the first embodiment.

A gas diffusion layer 100 according to Third Example is featured in that, in the gas diffusion layer 100 according to any one of the first embodiment, the modification of the first embodiment, and First and Second Examples of the first embodiment, a communication path 23 communicates a through-hole 21 LD and a through-hole 21 RD with each other, the through-holes 21 LD and 21 RD being formed in the same single sheet 22D adjacent to a sheet 22 in which the communication path 23 is formed. In other words, the communication path 23 communicates the through-hole 21 LD at the left and the through-hole 21 RD at the right with each other, the through-holes 21 LD and 21 RD being formed in the same single sheet 22D on the lower side of the sheet 22 in which the communication path 23 is formed. The through-hole 21 LD and the through-hole 21 RD are deviated from each other through a distance corresponding to a length of the communication path 23 in a direction parallel to a principal surface of the laminate 20.

Furthermore, as illustrated in Fig. 4, a sheet 22U on the upper side of the sheet 22 in which the communication path 23 is formed may have a through-hole 21U just above the through-hole 21 LD. In this case, the communication path 23 communicates the through-hole 21 U and the through-hole 21 RD with each other. Alternatively, the sheet 22U on the upper side of the sheet 22 in which the communication path 23 is formed may have a through-hole (not illustrated) just above the through-hole 21 RD. In this case, the communication path 23 communicates the through-hole just above the through-hole 21 RD and the through-hole 21 LD with each other.

Since the laminate 20 includes the communication paths 23, the gas passing through the laminate 20 can be delivered not only in the direction penetrating the laminate 20, but also in the direction parallel to the principal surface of the laminate 20. As a result, diffusivity of the gas in the gas diffusion layer 100 is improved.

The gas diffusion layer 100 according to Third Example may be constituted in a similar structure to that of the gas diffusion layer 100 according to any one of the first embodiment, the modification of the first embodiment, and First and Second Examples of the first embodiment except for the above-described features.

### Fourth Example

Fig. 5 illustrates an example of a gas diffusion layer according to Fourth Example of the first embodiment.

A gas diffusion layer 100 according to Fourth Example is featured in that, in the gas diffusion layer 100 according to any one of the first embodiment, the modification of the first embodiment, and First to Third Examples of the first embodiment, a communication path 23 communicates a through-hole 21U and a through-hole 21D with each other, the through-holes 21U and 21 D being formed respectively in different sheets, i.e., a sheet 22U and a sheet 22D, adjacent to a sheet 22 in which the communication path 23 is formed. In other words, the communication path 23 communicates the through-hole 21 U in the sheet 22U on the upper side of the sheet 22 in which the communication path 23 is formed and the through-hole 21 D in the sheet 22D on the lower side thereof with each other. The through-hole 21 U and the through-hole 21D are deviated from each other through a distance corresponding to a length of the communication path 23 in a direction parallel to a principal surface of the laminate 20.

Since the laminate 20 includes the communication paths 23, the gas passing through the laminate 20 can be delivered not only in a direction penetrating the laminate 20, but also in the direction parallel to the principal surface of the laminate 20. As a result, diffusivity of the gas in the gas diffusion layer 100 is improved.

The gas diffusion layer 100 according to Fourth Example may be constituted in a similar structure to that of the gas diffusion layer 100 according to any one of the first embodiment, the modification of the first embodiment, and First to Third Examples of the first embodiment except for the above-described features.

### Second Embodiment

An electrochemical hydrogen pump according to a second embodiment includes an electrolyte membrane having a pair of principal surfaces, a cathode catalyst layer disposed on one of the principal surfaces of the electrolyte membrane, an anode catalyst layer disposed on the other principal surface of the electrolyte membrane, a cathode gas diffusion layer disposed in contact with the cathode catalyst layer, an anode gas diffusion layer disposed in contact with the anode catalyst layer, a first plate including a gas flow channel through which anode gas flows, a second plate including a gas flow channel through which cathode gas flows, and a voltage applying unit that applies a voltage between the cathode catalyst layer and the anode catalyst layer. The anode gas diffusion layer includes the gas diffusion layer according to any one of the first embodiment, the modification of the first embodiment, and First to Fourth Examples of the first embodiment.

With the features described above, the anode gas diffusion layer used in the second embodiment can reliably provide rigidity at a level endurable against pressing exerted on the electrolyte membrane under high pressure, and can make anode gas diffused more uniformly than in the related art. More specifically, since the anode gas diffusion layer includes the communication paths, the anode gas passing through the anode gas diffusion layer from the first plate can be delivered not only in one direction, but also in any desired direction. Thus, by stacking, in the anode gas diffusion layer, the sheets including the communication paths in different layout patterns, a flow direction of the anode gas in the anode gas diffusion layer can be set optionally. As a result, diffusivity of the anode gas in the anode gas diffusion layer is improved, whereby an increase in the reaction overpotential of the electrochemical hydrogen pump can be suppressed. In other words, an increase in the reaction resistance (reaction overpotential) in a dissociation process of hydrogen in the anode gas into a proton and an electron, namely an increase in the power consumption necessary for an operation of compressing hydrogen in the electrochemical hydrogen pump, can be suppressed in comparison with the related art.

### Device Configuration

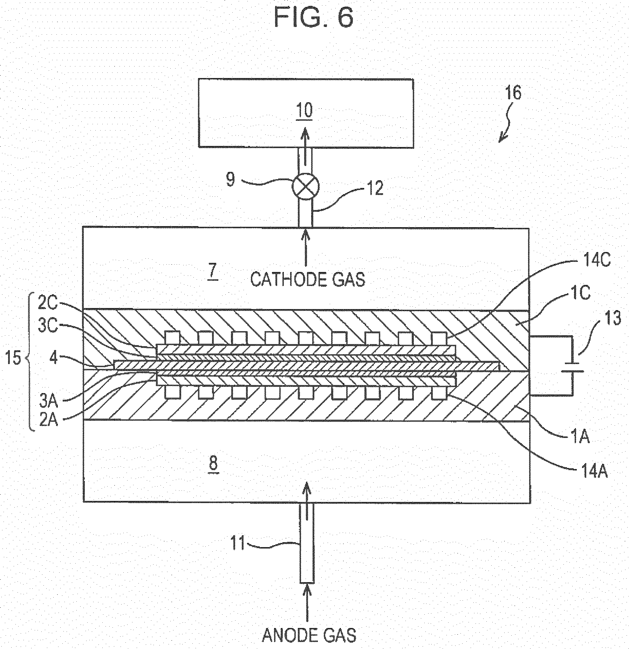

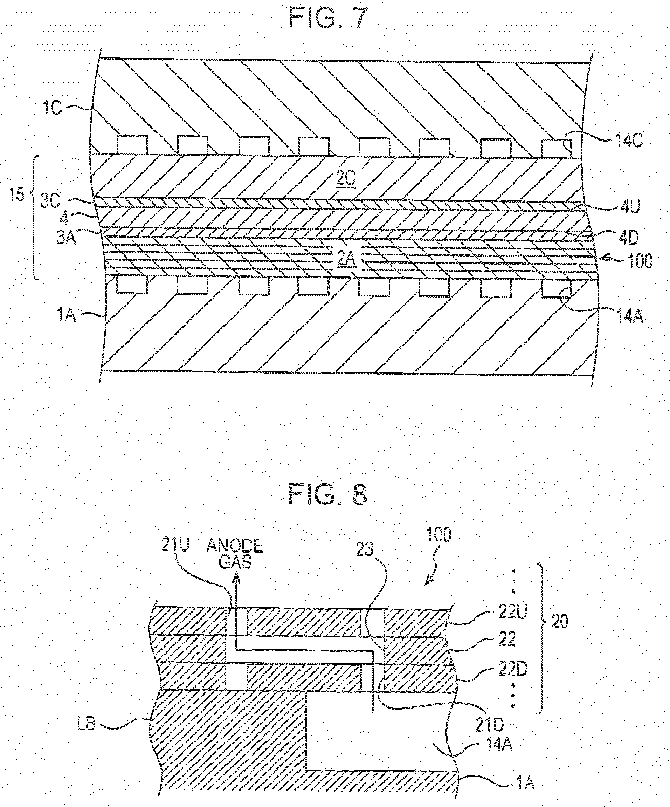

Figs. 6 and 7 each illustrate an example of an electrochemical hydrogen pump 16 according to the second embodiment.

The electrochemical hydrogen pump 16 includes an electrolyte membrane 4, a cathode catalyst layer 3C, an anode catalyst layer 3A, a cathode gas diffusion layer 2C, an anode gas diffusion layer 2A, a first plate 1A, a second plate 1C, and a voltage applying unit 13.

As illustrated in Fig. 7, the electrolyte membrane 4 has a pair of principal surfaces 4U and 4D. The one principal surface 4U of the electrolyte membrane 4 is an upper surface (front surface), and the other principal surface 4D of the electrolyte membrane 4 is a lower surface (rear surface).

The electrolyte membrane 4 is a proton-conducting polymer membrane through which protons (H⁺) are permeable. The electrolyte membrane 4 can be made of any type of proton-conducting polymer membrane. The electrolyte membrane 4 may be, for example, a fluorine-based polymer electrolyte membrane. In particular, Nafion (registered trademark, made by Du Pont) or Aciplex (trade name, made by Asahi Kasei Corporation), for example, can be used.

The cathode catalyst layer 3C is disposed on the one principal surface 4U of the electrolyte membrane 4. The cathode catalyst layer 3C contains, for example, platinum as a catalyst metal, but the present disclosure is not limited to such a case.

The anode catalyst layer 3A is disposed at the other principal surface 4D of the electrolyte membrane 4. The anode catalyst layer 3A contains, for example, RuIrFeOx as a catalyst metal, but the present disclosure is not limited to such a case.

Regarding the cathode catalyst layer 3C and the anode catalyst layer 3A, a catalyst preparation method is not limited to particular one because the catalyst can be prepared by various methods. A catalyst carrier may be, for example, conductive porous material powder or carbon-based powder. The carbon-based powder may be, for example, powder of graphite, carbon black, or activated carbon having electrical conductivity. A method of supporting a catalyst metal, such as platinum or the like, on the carrier made of, e.g., carbon is not limited to particular one. For example, a powder mixing method or a liquid-phase mixing method may be used. In one example of the latter liquid-phase mixing method, the carrier made of, e.g., carbon is dispersed in a solution of a colloidal catalyst component, thus causing the catalyst component to be adsorbed on the carrier. When necessary, it is also possible to use an active oxygen removing material as a carrier, and to support a catalyst metal, such as platinum or the like, on the carrier in a manner similar to that described above. A supported state of the catalyst metal, such as platinum, on the carrier is not limited to particular one. In one example, the catalyst metal may be atomized into micro-particles and supported on the carrier in a high dispersion state.

The cathode gas diffusion layer 2C is disposed in contact with the cathode catalyst layer 3C. The cathode gas diffusion layer 2C may be in the form of a single sheet instead of such a laminate made up of a plurality of sheets as constituting the anode gas diffusion layer 2A described below. The cathode gas diffusion layer 2C may be made of, e.g., a sheet-like porous material that is obtained, for example, by plating platinum on surfaces of high-modulus graphitized carbon fibers or a surface of a sintered body of titanium powder. In the case of employing the graphitized carbon fibers, carbon fibers are subjected to heat treatment at, e.g., 2000°C or higher, thereby causing graphite crystals to be developed for transformation to graphite fibers.

The anode gas diffusion layer 2A is disposed in contact with the anode catalyst layer 3A. The anode gas diffusion layer 2A needs to have rigidity at a level endurable against pressing exerted on the electrolyte membrane 4 under high pressure. The anode gas diffusion layer 2A may be any type of layer insofar as the layer exhibits rigidity at a level endurable against pressing exerted on the electrolyte membrane 4 under high pressure. In this embodiment, the anode gas diffusion layer 2A includes the gas diffusion layer 100. As described above, the gas diffusion layer 100 includes the laminate 20. By employing, e.g., a metal sheet or the like as each of the sheets 22 in the laminate 20, the gas diffusion layer 100 can be reliably given with the rigidity at a level endurable against pressing exerted on the electrolyte membrane 4 under high pressure. Because the gas diffusion layer 100 used in this embodiment is similar to the gas diffusion layer 100 according to any one of the first embodiment, the modification of the first embodiment, and First to Fourth Examples of the first embodiment, detailed description of the gas diffusion layer 100 is omitted here.

Thus, a membrane electrode assembly (MEA) 15 includes the electrolyte membrane 4, the cathode catalyst layer 3C and the anode catalyst layer 3A disposed respectively on the pair of principal surfaces 4U and 4D of the electrolyte membrane 4, the cathode gas diffusion layer 2C disposed on an upper surface of the cathode catalyst layer 3C, and the anode gas diffusion layer 2A disposed at a lower surface of the anode catalyst layer 3A. Individual sheets constituting those layers are joined together in a multilayered state.

The first plate 1A includes a gas flow channel 14A through which the anode gas flows. In other words, the first plate 1A serves as a member for supplying the anode gas to the anode gas diffusion layer 2A. More specifically, the gas flow channel 14A having, e.g., a serpentine shape in a plan view is formed in the first plate 1A, and the first plate 1A is arranged such that a region where the gas flow channel 14A is formed is held in contact with the lower surface of the anode gas diffusion layer 2A.

Drying of the electrolyte membrane 4 may lead to a possibility of not only increasing the film resistance (IR loss) and the reaction resistance (reaction overpotential) in a dissociation process of hydrogen into a proton and an electron, but also making the electrolyte membrane 4 more susceptible to breakage. Therefore, the anode gas contains at least hydrogen gas and water molecules (water vapor). The anode gas may be, for example, reformed gas containing hydrogen or hydrogen-containing gas produced with a water electrolysis method.

The second plate 1C includes a gas flow channel 14C through which cathode gas flows. In other words, the cathode gas incoming from the cathode gas diffusion layer 2C flows through the gas flow channel 14C in the second plate 1C. More specifically, the gas flow channel 14C having, e.g., a serpentine shape in a plan view is formed in the second plate 1C, and the second plate 1C is arranged such that a region where the gas flow channel 14C is formed is held in contact with the upper surface of the cathode gas diffusion layer 2C. The cathode gas may be, for example, high-purity hydrogen gas.

A unit cell of the electrochemical hydrogen pump 16 is obtained by arranging the first plate 1A and the second plate 1C respectively in contact with upper and lower surfaces of the MEA 15 in a sandwiching relation.

The voltage applying unit 13 applies a voltage between the cathode catalyst layer 3C and the anode catalyst layer 3A. More specifically, a plus terminal of the voltage applying unit 13 is connected to the conductive first plate 1A, and a minus terminal of the voltage applying unit 13 is connected to the conductive second plate 1C. The voltage applying unit 13 may be of any type insofar as it is able to apply a voltage between the cathode catalyst layer 3C and the anode catalyst layer 3A.

Here, the cathode gas diffusion layer 2C and the anode gas diffusion layer 2A serve as power feeders in a cathode and an anode of the MEA 15, respectively. In other words, the cathode gas diffusion layer 2C and the anode gas diffusion layer 2A have roles of supplying electric power between the second plate 1C and the cathode catalyst layer 3C and between the first plate 1A and the anode catalyst layer 3A, respectively.

Furthermore, the cathode gas diffusion layer 2C and the anode gas diffusion layer 2A have roles of diffusing gases between the gas flow channel 14C in the second plate 1C and the cathode catalyst layer 3C and between the gas flow channel 14A in the first plate 1A and the anode catalyst layer 3A, respectively. For example, the anode gas flowing through the gas flow channel 14A in the first plate 1A is caused to diffuse over the surface of the anode catalyst layer 3A through the anode gas diffusion layer 2A.

When necessary, a stack made up of plural unit cells of the electrochemical hydrogen pumps 16 may be constituted by disposing, e.g., a cooler in association with the unit cell of the electrochemical hydrogen pump 16, and by stacking two or more unit cells in a multilayered state.

As illustrated in Fig. 6, the electrochemical hydrogen pump 16 includes an anode chamber 8 and a the cathode chamber 7.

The inside of the anode chamber 8 is communicated with an anode inlet pipe 11 and is also communicated with the gas flow channel 14A in the first plate 1A through not-illustrated fluid flow channels (such as a pipe and a manifold). Thus, the anode gas flowing through the anode inlet pipe 11 flows into the anode chamber 8 and is then supplied to the gas flow channel 14A in the first plate 1A.

The inside of the cathode chamber 7 is communicated with a cathode outlet pipe 12 and is also communicated with the gas flow channel 14C in the second plate 1C through not-illustrated fluid flow channels (such as a pipe and a manifold). Thus, the cathode gas (hydrogen gas) having passed through the MEA 15 flows through the gas flow channel 14C in the second plate 1C and further flows into the cathode chamber 7. Thereafter, the cathode gas is supplied to the cathode outlet pipe 12. An on-off valve 9 (such as a solenoid valve) is disposed in the cathode outlet pipe 12, and the cathode gas is stored in a high-pressure tank 10 by opening and closing the on-off valve 9 at proper timings. The cathode gas thus stored is used, for example, as fuel of a not-illustrated apparatus utilizing hydrogen (such as a fuel battery car).

With the features described above, the anode gas diffusion layer 2A used in this embodiment can reliably provide rigidity at a level endurable against pressing exerted on the electrolyte membrane 4 under high pressure, and can make the anode gas diffused more uniformly than in the related art. More specifically, since the anode gas diffusion layer 2A includes the communication paths 23, the anode gas passing through the anode gas diffusion layer 2A from the first plate 1A can be delivered not only in one direction, but also in any desired direction. Thus, by stacking, in the anode gas diffusion layer 2A, the sheets including the communication paths 23 in different layout patterns, a flow direction of the anode gas in the anode gas diffusion layer 2A can be set optionally. As a result, diffusivity of the anode gas in the anode gas diffusion layer 2A is improved, whereby an increase in the reaction overpotential of the electrochemical hydrogen pump 16 can be suppressed. In other words, an increase in the reaction resistance (reaction overpotential) in a dissociation process of hydrogen in the anode gas into a proton and an electron, namely an increase in the power consumption necessary for an operation of compressing hydrogen in the electrochemical hydrogen pump 16, can be suppressed in comparison with the related art.

### Operation

The operation of the electrochemical hydrogen pump according to the second embodiment will be described below with reference to Figs. 6 and 7.

Part or the whole of the operation described below may be executed in accordance with a control program installed in a controller (not illustrated). The controller may be of any type insofar as it has a suitable control function. The controller includes, for example, an arithmetic circuit and a storage circuit storing the control program. The arithmetic circuit may be, for example, an MPU or a CPU. The storage circuit may be, for example, a memory. The controller may be constituted by a single controller that executes centralized control, or by a plurality of controllers that execute decentralized control under cooperation.

First, the voltage applying unit 13 applies a voltage between the anode and the cathode of the MEA 15.

Then, the anode gas is supplied to the anode chamber 8 through the anode inlet pipe 11. Hydrogen in the anode gas dissociates an electron and becomes a proton (H⁺) (formula (1)) at the anode. The dissociated electron moves to the cathode via the voltage applying unit 13.

On the other hand, the proton permeates through the electrolyte membrane 4 while entraining a water molecule, and comes into contact with the cathode. At the cathode, a reduction reaction occurs between the proton having permeated through the electrolyte membrane 4 and the electron supplied from the cathode gas diffusion layer 2C, and the cathode gas (hydrogen gas) is produced (formula (2)).

Thus, the anode gas containing impurities, such as CO₂ gas, is purified with high efficiency. In other words, the impurities, such as CO₂ gas, are removed in the MEA 15. The anode gas contains, as one of the impurities, CO gas in some cases. In those cases, because the CO gas reduces catalyst activity of the anode catalyst layer 3A and so on, it is preferable to remove the CO gas by a not-illustrated CO remover (such as a transformer or a CO selective oxidizer).

When the on-off valve 9 is closed, a pressure of the cathode gas in the cathode chamber 7 rises, and a cathode gas pressure becomes high. More specifically, a relation among a gas pressure P1 at the anode, a gas pressure P2 at the cathode, and a voltage E of the voltage applying unit 13 is formulated by the following formula (3).

Anode: H₂ (low pressure) → 2H⁺ + 2e⁻ ... (1)

Cathode: 2H⁺ + 2e⁻ → H₂ (high pressure) ... (2)

E = (RT/2F) ln(P2/P1) + Ir (3)

In the formula (3), R denotes the gas constant (8.3145 J/K·mol), T denotes the temperature (K) of the MEA 15, F denotes the Faraday constant (96485 C/mol), P2 denotes the cathode gas pressure, P1 denotes the anode gas pressure, i denotes the current density (A/cm²), and r denotes the cell resistance (Ω·cm²).

From the formula (3), it is easily understood that the cathode gas pressure P2 can be raised by increasing the voltage E applied from the voltage applying unit 13.

Thus, in the electrochemical hydrogen pump 16 according to the second embodiment, the cathode gas pressure in the cathode chamber 7 is raised by closing the on-off valve 9 and by increasing the voltage E applied from the voltage applying unit 13. When the cathode gas pressure rises to a predetermined pressure or above, the on-off valve 9 is opened such that the cathode gas in the cathode chamber 7 is filled into the high-pressure hydrogen tank 10 through the cathode outlet pipe 12. On the other hand, when the cathode gas pressure in the cathode chamber 7 lowers beyond a predetermined pressure, the on-off valve 9 is closed to cut off the communication between the cathode chamber 7 and the high-pressure hydrogen tank 10. Therefore, the cathode gas in the high-pressure hydrogen tank 10 is suppressed from flowing backward to the cathode chamber 7.

In such a manner, the pressure of the cathode gas (hydrogen gas) is boosted to a desired target pressure by the electrochemical hydrogen pump 16, and the pressurized cathode gas is filled in the high-pressure hydrogen tank 10. Example

Fig. 8 illustrates an example of a gas diffusion layer in an electrochemical hydrogen pump according to Example of the second embodiment.

An electrochemical hydrogen pump 16 according to this Example is featured in that, in the electrochemical hydrogen pump 16 according to the second embodiment, a communication path 23 communicates a through-hole 21 D in the laminate 20, the through-hole 21 D being positioned on a line perpendicularly extending from the gas flow channel 14A in the first plate 1A, with a through-hole 21 U in the laminate 20, the through-hole 21 U being positioned on a line perpendicularly extending from a portion (hereinafter referred to as a "rib LB") of the first plate 1A where the gas flow channel 14A is not provided. The through-hole 21 U and the through-hole 21 D are deviated from each other through a distance corresponding to a length of the communication path 23 in a direction parallel to a principal surface of the laminate 20.

This Example has such a configuration that the anode gas is supplied to flow into the through-hole 21 D in the laminate 20 via the gas flow channel 14A in the first plate 1A. Accordingly, if the laminate 20 does not include the above-described communication path, the anode gas does not flow into the through-hole 21 U in the laminate 20, the through-hole 21 U being positioned on the line perpendicularly extending from the rib LB of the first plate 1A where the gas flow channel 14A is not provided. This leads to a possibility that diffusion of the anode gas in the gas diffusion layer 100 becomes not uniform.

When a horizontal size of the rib LB of the first plate 1A is about several hundred microns (e.g., about 500 µm), for example, a diameter of each of the through-hole 21D and the through-hole 21U needs to be set to about several ten microns (e.g., about 50 µm) from the viewpoint of preventing breakage of the electrolyte membrane 4 under high pressure. In such a case, unless the laminate 20 includes the communication path, the anode gas does not flow into the through-hole 21 U that is positioned on the line perpendicularly extending from the rib LB.

In this Example, since the above-described structure allows the anode gas to flow into the through-hole 21 U in the laminate 20 as well via the communication path 23 in the gas diffusion layer 100, the above-mentioned non-uniformity of diffusion of the anode gas can be suppressed.

The electrochemical hydrogen pump 16 according to this Example may be constituted in a similar configuration to that of the electrochemical hydrogen pump 16 according to the second embodiment except for the above-described features. The above-described shapes and sizes of the through-holes 21 and the rib LB are merely illustrative examples, and the present disclosure is not limited to those examples.

From the above description, a variety of improvements and other embodiments of the present disclosure are apparent to those skilled in the art. Accordingly, the above description is to be construed in an illustrative sense and is provided with intent to teach the best mode for carrying out the present disclosure to those skilled in the art. Details of the structure and/or the function of the present disclosure can be substantially modified without departing from the gist of the present disclosure.

One aspect of the present disclosure provides, for example, a gas diffusion layer capable of making gas diffused more uniformly than in the prior art. Accordingly, the one aspect of the present disclosure can be utilized in an electrochemical hydrogen pump, for example.

## Claims

1. A gas diffusion layer including a laminate made up of sheets each having through-holes through which gas passes, wherein one or a plurality of sheets in the laminate includes communication paths to communicate the through-holes in another sheet adjacent to the one sheet or one of the plurality of sheets with each other or to communicate the through-holes in another sheet adjacent to the one sheet or one of the plurality of sheets with the through-holes in the other adjacent sheet, the through-holes being separated from and being not communicated with the other through-holes in the same sheet.

2. The gas diffusion layer according to Claim 1, wherein a number of the communication paths in one of the plurality of sheets in the laminate, the one sheet being in contact with a catalyst layer, is smaller than a number of the communication paths in another sheet of the plurality of sheets.

3. The gas diffusion layer according to Claim 1 or 2, wherein adjacent two of the sheets in the laminate are bonded to each other.

4. The gas diffusion layer according to any one of Claims 1 to 3, wherein the through-holes and the communication paths are formed in same one principal surface of the one sheet or each of the plurality of sheets.

5. The gas diffusion layer according to any one of Claims 1 to 4, wherein respective opening areas of the through-holes and the communication paths in same one principal surface of the one sheet or each of the plurality of sheets are different from each other.

6. The gas diffusion layer according to Claim 5, wherein the opening area of the communication paths is larger than the opening area of the through-holes in the same one principal surface of the one sheet or each of the plurality of sheets.

7. The gas diffusion layer according to Claims 1 to 6, wherein respective numbers of the through-holes and the communication paths in same one principal surface of the one sheet or each of the plurality of sheets are different from each other.

8. The gas diffusion layer according to Claim 7, wherein the number of the through-holes is larger than the number of the communication paths in the same one principal surface of the one sheet or each of the plurality of sheets.

9. The gas diffusion layer according to Claims 1 to 8, wherein an area of a region of the sheet where the through-holes are not opened is larger than an opening area of the through-holes in a zone of same one principal surface of the sheet, the zone being positioned in an overlapped relation to a catalyst layer to which the gas diffusion layer is adjacent.

10. An electrochemical hydrogen pump comprising:
an electrolyte membrane having a pair of principal surfaces;
a cathode catalyst layer disposed on one of the principal surfaces of the electrolyte membrane;
an anode catalyst layer disposed on the other principal surface of the electrolyte membrane;
a cathode gas diffusion layer disposed in contact with the cathode catalyst layer;
an anode gas diffusion layer disposed in contact with the anode catalyst layer;
a first plate including a gas flow channel through which anode gas flows;
a second plate including a gas flow channel through which cathode gas flows; and
a voltage applying unit that applies a voltage between the cathode catalyst layer and the anode catalyst layer,
wherein the anode gas diffusion layer includes the gas diffusion layer according to Claims 1 to 9.

11. The electrochemical hydrogen pump according to Claim 10, wherein the communication path communicates one of the through-holes in the laminate, the one through-hole being positioned on a line perpendicularly extending from the gas flow channel in the first plate, with another one of the through-holes in the laminate, the other through-hole being positioned on a line perpendicularly extending from a portion of the first plate where the gas flow channel is not provided.

12. The electrochemical hydrogen pump according to Claim 10, wherein the cathode gas diffusion layer includes a single sheet including a plurality of ventilation holes.
